# FASCICULE DE BREVET EUROPEEN

(11) **EP 0 368 752 B1**
(45) Date de publication et mention de la délivrance du brevet: **18.03.1998**
(21) Numéro de dépôt: 89403068.3
(22) Date de dépôt: 08.11.1989
(51) Int. Cl.: G07F 7/10, G06F 1/00

(54) **Système de téléchargement sécurisé d'un terminal**
Versichertes Fernladungssystem eines Terminals
Protected remote loading system of a terminal

(30) Priorité: 09.11.1988 FR 8814604
(43) Date de publication de la demande: 16.05.1990
(73) Titulaire: CP8 Transac, 78430 Louveciennes (FR)
(72) Inventeur: Goire, Christian, F-78340 Les Clayes sous Bois (FR); Sigaud, Alain, F-78990 Elancourt (FR); Moyal, Eric, F-75003 Paris (FR)
(74) Mandataire: Corlu, Bernard

(56) Documents cités:
- EP-A- 83 209
- EP-A- 205 095
- EP-A- 218 176
- EP-A- 268 141
- GB-A- 2 181 281
- US-A- 4 742 215
- IBM TECHNICAL DISCLOSURE BULLETIN. vol. 25, no. 8, janvier 1983, NEW YORK US pages 4295 - 4297; B.E. BARNS et al.: "COMPUTER PROGRAM RELOCATION AND SEGMENTATION"

## Description

La présente invention concerne un système de téléchargement sécurisé d'un terminal.

Il est connu de pouvoir télécharger des machines de traitement de données, mais le problème qui se pose est de protéger ces machines contre des téléchargements intempestifs voire frauduleux. Ainsi si une machine comporte des mémoires partagées en zones de programmes certifiées "CPZ" et en zones de programmes non certifiées "NPZ", il est nécessaire de prévoir des moyens permettant de s'assurer que les programmes téléchargés dans la zone certifiée, l'ont été, selon une procédure qui garantit qu'ils n'ont pas été fraudés. Par ailleurs, le problème est également de proposer un système souple et hybride qui permette à la fois, selon les désirs et les applications, d'être très protégé ou ouvert selon des degrés plus ou moins grands.

Un autre problème à résoudre est de fournir au terminal des moyens pour procéder à des autorisations de transferts de programmes entre des zones mémoire de niveaux de sécurité différents.

On connaît, du document EP-A-0.218.176, des moyens pour charger une instruction dans une carte à microprocesseur, dans une zone mémoire déterminée de celle-ci, parmi plusieurs : à cet effet, l'instruction contient une information définissant la zone mémoire à charger. Toutefois, un transfert d'instruction d'une zone à l'autre de la carte n'est pas prévu.

On connaît par ailleurs, du document EP-A-0.205.095, un procédé de transmission de données sécuritaire entre un ordinateur hôte et des périphériques : ces données sont cryptées sur le trajet reliant ces appareils. Toutefois, on ne procède pas à un aiguillage des données dans une zone déterminée de l'appareil les recevant.

L'invention concerne donc un système selon l'objet de la revendication 1.

D'autres caractéristiques et avantages de la présente invention apparaîtront plus clairement à la lecture de la description ci-après faite en référence aux dessins annexés dans lesquels :
- la figure 1 représente une vue schématique d'un système selon l'invention ;
- la figure 2 représente le schéma d'organisation des mémoires d'un terminal ;
- la figure 3 représente le contenu du mot des deux registres exprimant les possibilités offertes au terminal ;
- la figure 4 résume la partition des mémoires du terminal ;
- la figure 5 représente une procédure de téléchargement selon l'invention ;
- la figure 6 représente les transferts d'information réalisables entre les entités de l'invention.

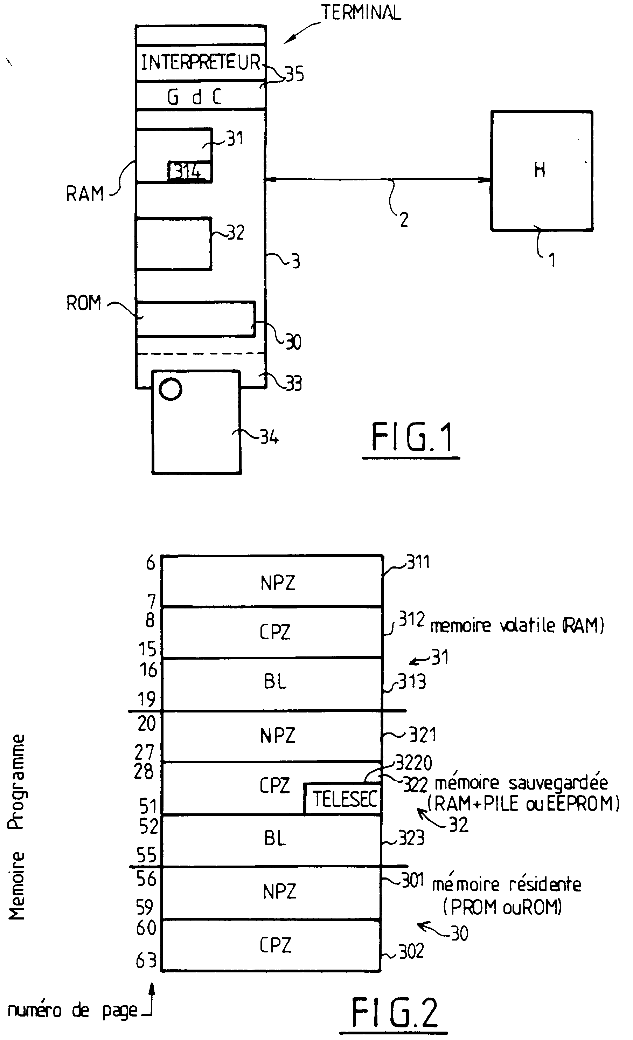

La figure 1 représente un ordinateur principal ou hôte (1), relié par une ligne de transmission de données (2) à un terminal ou lecteur (3) éloigné de cet ordinateur principal (1). Ce terminal (3) comporte un ensemble de mémoires (30, 31, 32) organisées de la manière suivante. Une première mémoire (31) est constituée par une mémoire volatile type RAM, une deuxième mémoire (32) est constituée par une mémoire sauvegardée type RAM sauvegardée par une pile ou mémoire EEPROM, et une troisième mémoire (30) est constituée par une mémoire résidente du type PROM ou ROM. Le terminal comporte en outre un lecteur (33) d'objets portables (34) constitués par un circuit microcalculateur, comprenant un microprocesseur et une mémoire programmable, connectable à l'extérieur par des contacts. Pour plus de détails sur la constitution d'un tel objet portable, on pourra se référer à la demande de brevet FR 2 401 459 correspondante au brevet US 4 211 919 et pour les détails sur le microcalculateur associé avec une mémoire programmable, on se réfèrera à la demande de brevet FR 2 461 301 correspondante au brevet US 4 382 279.

L'ensemble de ces mémoires est utilisé comme mémoire de programme exécutable et interprétable et comme zone de travail constituée de registres d'usages généraux. La zone de travail est essentiellement constituée par une partie (314) de la mémoire RAM (31). La mémoire programme (fig.2) contient vingt pages de mémoire de seize K/octets chacune de la mémoire volatile (31). La mémoire sauvegardée est constituée de trente six pages de seize K/octets de la mémoire (32) et la mémoire résidente est constituée de huit pages de seize K/octets de la mémoire (30). Chaque zone mémoire volatile, zone mémoire sauvegardée et zone mémoire résidente est subdivisée en deux ou trois sous-zones appelées zone programme certifiée "CPZ", zone programme non certifiée "NPZ" et boîte à lettres "BL".

Les subdivisions des mémoires définissent des niveaux de sécurité pour les programmes contenus par ces mémoires. Ainsi les programmes implantés dans une zone "CPZ" seront dits de niveau de sécurité certifié tandis que les programmes implantés dans une zone "NPZ" sont des programmes de niveau de sécurité non certifié. Les boîtes à lettres sont des zones d'accès contrôlées par une clé. Elles contiennent essentiellement des données. Un programme interpréteur et gestionnaire de consignes (GdC) résidant dans une mémoire du type ROM ou PROM (35) assure l'interprétation entre les programmes écrits dans un langage compact évolué et indépendant du matériel utilisé et le langage propre au microprocesseur installé dans le terminal. Le gestionnaire de consignes est quant à lui chargé d'exécuter une consigne autorisée par un des octets de commande ECW1, ECW2 décrit ci-après. A ce programme interpréteur et gestionnaire de consignes sont donnés les droits d'accès les plus larges supérieurs à ceux des zones "NPZ" ou "CPZ". Les programmes implantés dans les zones "CPZ" de la mémoire permettent des lectures/écritures dans toutes les zones "NPZ", ou "CPZ", aussi bien de la mémoire volatile (31), que de la mémoire sauvegardée (32) ou de la mémoire résidente (30) et seulement des lectures et écritures sous contrôle du programme interpréteur et d'un programme d'application dans les zones boîtes à lettres, avec des règles d'écriture et de lecture définies par le programme d'application, au moment de la création de la boîte à lettres. Les programmes implantés dans les zones "NPZ" (311, 321, 301) sont affectés du niveau de sécurité non certifié et ont seulement le droit de faire des lectures/écritures dans la zone "NPZ" (311, 321) des mémoires volatiles sauvegardées et résidentes, et ne peuvent faire que des lectures et écritures sous contrôle de l'interpréteur dans les zones boîtes à lettres (313, 323) des mémoires volatile (31) ou sauvegardée (32).

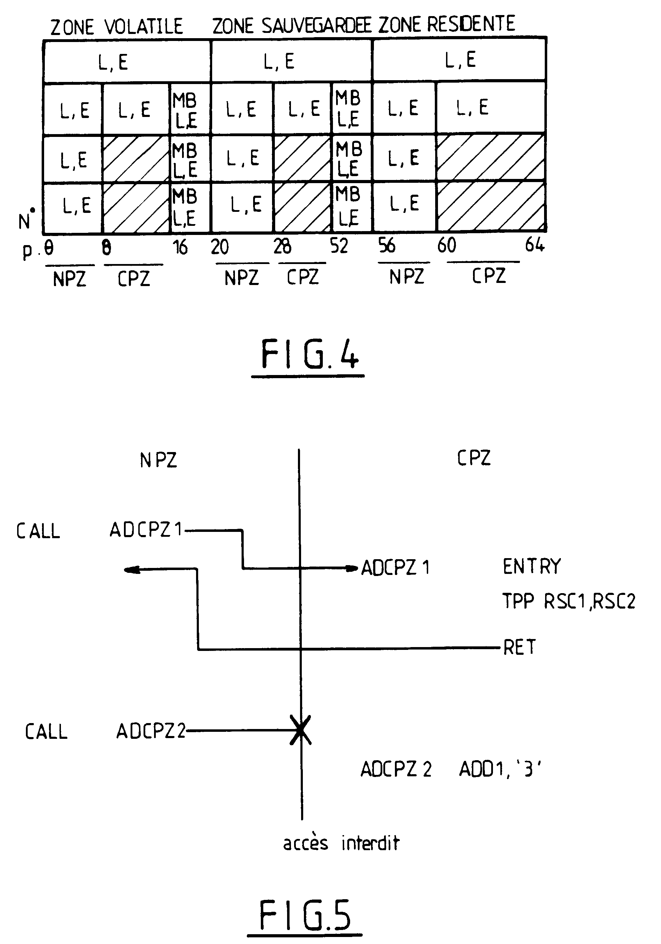

La figure 4 résume la partition des mémoires du terminal et les différents droits d'accès à ces mémoires.

Le fonctionnement du système va être explicité ci-après.

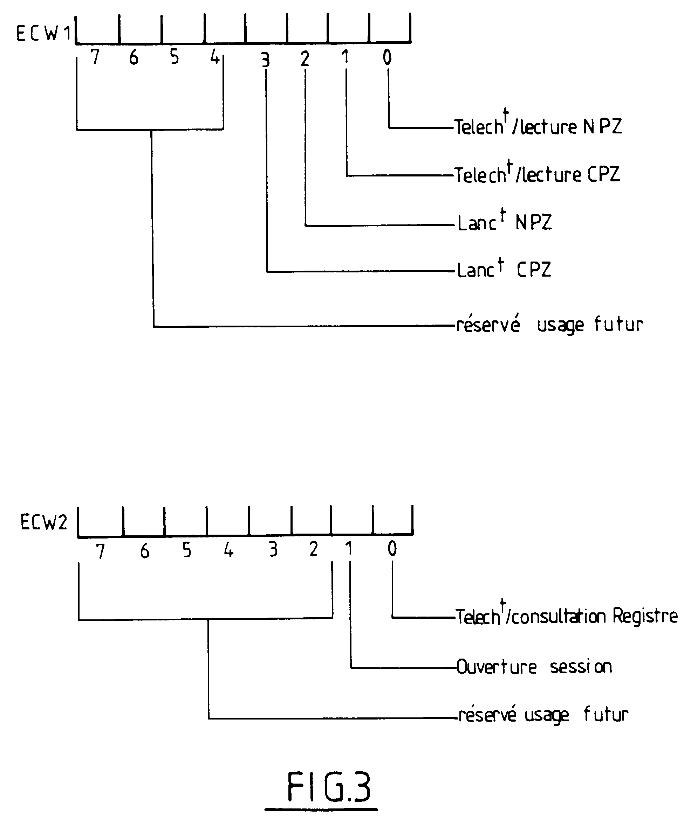

Initialement, un terminal équipé d'un lecteur contient dans la zone mémoire sauvegardée au moins une instruction CHSB dont les octets de commandes associés à cette instruction permettent l'acceptation ou non de certaines consignes envoyées par l'ordinateur hôte de téléchargement. Cette instruction CHSB comporte deux octets de commande "ECW1", "ECW2" dont les bits représentés à la figure 3 sont chargés dans des registres de la mémoire de travail (314) aux adresses FFEB et FFEC de cette dernière pour indiquer au gestionnaire de consignes les consignes qui peuvent être acceptées ou non. Lors de l'exécution et du décodage d'une consigne de téléchargement, de lancement de programme, de lecture, ou d'ouverture d'une session, le gestionnaire de consignes va lire les octets de commande. Ainsi, en partant des poids faibles vers les poids forts, le premier bit du premier octet ECW1 autorise le téléchargement et la lecture de la zone NPZ ;
le deuxième bit autorise le téléchargement et la lecture de la zone "CPZ" ;
le troisième bit autorise le lancement externe à partir de l'hôte (1) d'un programme en "NPZ" ;
le quatrième bit autorise le lancement externe à partir de l'hôte (1) d'un programme en "CPZ" ;
le cinquième bit significatif constitué par le premier bit du deuxième mot de commande ECW2 autorise le téléchargement et la lecture d'une banque de registre constituée par une partie de la mémoire de travail (314) ;
le sixième bit constitué par le deuxième bit du deuxième octet ECW2 autorise l'ouverture d'une session.

Lorsque les bits de ces deux mots sont à zéro, les consignes de téléchargement, de lancement de programme ou d'ouverture de session correspondantes ne sont pas prises en compte par le gestionnaire de consignes du terminal, et lorsque ces bits sont à un, les consignes sont prises en compte.

Lorsque le terminal est livré, les mots ECW1, ECW2 ont leurs bits positionnés, par défaut, de façon à permettre toutes les possibilités d'acceptation des différentes consignes. Ceci autorise donc l'ordinateur hôte à télécharger directement en zone "CPZ" un programme "TELE SEC" (3220) qui permettra par la suite de faire du téléchargement sécuritaire. Ce téléchargement pouvant être précédé ou non d'une certification ou authentification.

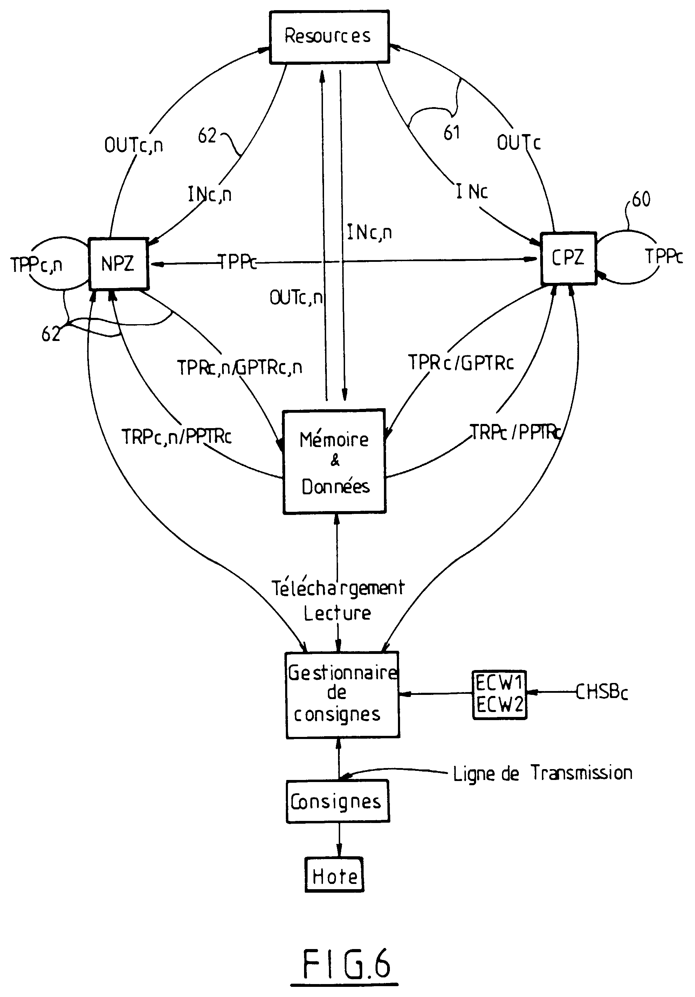

Une autre solution peut également consister à livrer des terminaux déjà équipés dans une zone "CPZ" (322) de la mémoire sauvegardée d'un programme de téléchargement sécuritaire. Ce programme modifie si nécessaire les registres ECW1/ECW2 et exécute un ensemble d'instructions qui permettent de mettre en oeuvre deux scénarios possibles. Selon un premier scénario, le programme téléchargé par l'ordinateur hôte pourra, par une instruction de branchement "GOTO" ou "CALL" suivie de l'adresse (ADCPZ1) de début du programme de téléchargement sécuritaire "TELE SEC", appeler ce programme implanté dans la zone "CPZ", ce programme débutant impérativement par une instruction ENTRY. Ce programme "TELE SEC" représenté à la figure 5 contient entre autre une instruction TPP RSC1, RSC2 et se termine par une instruction "RET" rendant la main au programme situé en "NPZ".

L'instruction "ENTRY" est un point d'entrée obligatoire d'une routine de niveau certifié pour tout programme situé en NPZ. Cela permet d'éviter que l'hôte ou un programme en "NPZ" puisse accéder en n'importe quel point d'un programme situé en "CPZ". Ainsi, comme representé en fig. 5, dans le cas où le programme en "NPZ" comporte une instruction "CALL AD CPZ2" demandant un branchement à l'adresse CPZ2 d'une zone "CPZ" et que l'instruction à cette adresse est autre qu'une instruction "ENTRY", l'interpréteur détectera un accès interdit.

L'instruction TPP permet de recopier un bloc-mémoire programme SC1 dans un bloc de mémoire programme SC2. Toutefois avant l'exécution de cette instruction l'interpréteur vérifiera par comparaison de l'adresse à laquelle se trouve cette instruction TPP et de l'adresse du bloc-mémoire SC2 que cette instruction est exécutable. En effet, dans le cas où l'instruction TPP se trouve dans la zone mémoire "NPZ" et demande la recopie d'un bloc de mémoire programme situé dans une zone "NPZ" vers un bloc mémoire programme situé dans une zone "CPZ", l'interpréteur n'autorise pas l'exécution de cette instruction. Dans ce cas l'interpréteur va s'arrêter ou se dérouter sur un sous-programme de traitement d'erreurs pour signaler à l'utilisateur qu'il n'a pas voulu exécuter cette instruction.

En fait, l'interpréteur fait le contrôle systématique de n'importe quelle instruction, d'où qu'elle vienne, manipulant une adresse pour vérifier si l'endroit où on demande d'accéder est autorisé à partir de l'endroit d'où cette instruction vient. On vérifie par ce moyen que les niveaux du programme correspondant à l'endroit d'où vient l'instruction est bien en accord avec les autorisations d'accès correspondantes à ce niveau données par la figure 4. Ainsi, le mot ECW1 doit avoir le bit 0 et le bit 2 au niveau "1" et le mot ECW2 doit avoir le bit 1 au niveau "1" pour permettre l'ouverture d'une session de téléchargement par exemple. Seule la possibilité de télécharger et lire en zone "NPZ" et de lancer un programme en zone "NPZ" est conservée. Par la suite tout programme téléchargé par l'hôte en zone "NPZ" comprendra une instruction d'appel du programme "TELE SEC" rangé dans une zone "CPZ" et permettant de faire le transfert d'un bloc-mémoire d'une zone "NPZ" vers un bloc-mémoire d'une zone "CPZ".

Un autre scénario peut consister à télécharger un programme "X" en "NPZ", puis à faire authentifier ce programme par un programme d'authentification et de certification en "CPZ". Le lancement du programme "X" peut se faire par une instruction "RUN" de lancement provenant de l'hôte si ECW l'autorise.

Le programme "X" s'il est lancé en étant dans une zone "NPZ", a peu de droits. Une autre possibilité consiste à faire implanter en zone "CPZ" le programme "X" comme on l'a vu précedemment et, dans ce cas, il aura tous les droits d'un programme en zone "CPZ".

Une procédure d'authentification peut être, par exemple, une procédure similaire à celle décrite dans la demande de brevet français N° 86 08 654 du 16 Juin 1986 et déposée au nom de BULL CP8. De même, une procédure de certification de l'authenticité de données peut être, par exemple, une procédure similaire à celle décrite dans la demande de brevet français N° 86 10 206 déposée le 11 Juillet 1986 au nom de BULL CP8. Par la modification des mots de commande ECW1/ECW2, on a vu qu'on peut modifier les conditions de téléchargement d'une zone "NPZ" vers une zone "CPZ" et le gestionnaire de consigne est en mesure de déterminer ces conditions en allant lire les mots de commande ECW1/ECW2 qui se trouvent stockés dans les registres de la zone de travail.

Notons que ECW1, ECW2 déterminent un certain nombre de niveaux :
- l'ouverture de session peut être autorisée ou non : si "non" la machine est totalement fermée.
- l'ouverture de session est autorisée :
alors on peut charger soit en "CPZ" ou "NPZ" suivant ECW. Mais on peut très bien interdire le lancement externe pour se laisser la possibilité de l'authentification en interne par une instruction CALL ou GOTO permettant de se dérouter sur le programme d'authentification. Le lancement "RUN" pour être autorisé, s'il ne l'était déjà, est autorisé en modifiant ECW.

Les possibilités et la souplesse du système de l'invention sont illustrées par la figure 6.

Le schéma représenté à la figure 6 présente les transferts d'information réalisables entre les entités suivantes de l'invention :
- zone NPZ de la mémoire programme,
- zone CPZ de la mémoire programme,
- ressources qui peuvent être un clavier, afficheur, etc,
- mémoire des données constituée par une partie de la RAM (31),
- hôte.
Les flèches de la figure indiquent le sens du flux d'information et le texte associé à la flêche définit :
- L'instruction permettant l'action de transfert.
   Les instructions sont :
   - OUT ou IN, instructions d'entrée-sortie,
   - TPP, transfert de mémoire programme à mémoire programme,
   - TPR ou GPTR, transfert de mémoire programme à mémoire de données,
   - TRP ou PPTR, transfert de mémoire de données à mémoire programme.
- Le type de mémoire où doit être localisée l'instruction. Le type est spécifié par une ou deux lettres accolées au mnémonique.

La minuscule "c" précise que l'instruction est en CPZ seulement. Les minuscules "n, c" précisent que l'instruction est en CPZ ou NPZ. Par exemple, la boucle notée 60 signifie que l'on peut transférer des informations de CPZ en CPZ uniquement grâce à l'instruction TPP implantée en CPZ.

Les échanges représentés par la référence 61 spécifient que l'on peut transférer des informations entre les ressources du système et la zone CPZ uniquement grâce à une instruction d'entrée-sortie implantée en zone CPZ.

Les échanges représentés par la référence 62 spécifient que l'on peut transférer des informations entre une zone NPZ et une autre entité du système uniquement grâce à une instruction implantée en CPZ ou en NPZ.

En ce qui concerne le gestionnaire de consignes, celui-ci exécutera les consignes de téléchargement/lecture en fonction de la valeur ECW1/ECW2, positionnée grâce à l'instruction CHSB implantée en CPZ uniquement.

## Revendications

1. Système comprenant un terminal (3) relié par une ligne de transmission (2) à une unité centrale (1), le terminal comportant :
- un microprocesseur et une mémoire divisée en une mémoire programme et une mémoire vive de travail (314), la mémoire vive de travail étant constituée de registres, la mémoire programme comportant une mémoire volatile (31), une mémoire sauvegardée non volatile (32) et une mémoire résidente (30), caractérisé en ce que chacune des mémoires constituant la mémoire programme est partagée en au moins une zone dite "non certifiée" (NPZ 311, 321, 301) destinée à recevoir des programmes de niveau de sécurité non certifié, et une zone dite "certifiée" (CPZ 312, 322, 302) destinée à recevoir des programmes de niveau de sécurité certifié, plus élevé que celui de la zone non certifiée, l'exécution d'une instruction de transfert de programme depuis une zone non certifiée vers une zone certifiée étant subordonnée à une procédure de contrôle de droits d'accès à la zone certifiée ;
et en ce que le terminal comporte :
- un programme interpréteur et de gestion de consignes agencé pour effectuer une interprétation entre un langage compact, évolué et indépendant du terminal utilisé, et un langage propre audit microprocesseur, et pour exécuter des consignes envoyées au terminal, ce programme pouvant accéder à chacune des parties de la mémoire ;
- un programme de contrôle de téléchargement (TELESEC) comportant au moins une instruction (CHSB) possédant un mot de commande (ECW) stocké dans un desdits registres de ladite mémoire vive de travail et définissant si le téléchargement d'un programme dans les différentes zones à partir d'une source extérieure au terminal est autorisé, le mot de commande (ECW) possédant une valeur définie par ladite instruction (CHSB) en fonction de droits déterminés donnés au terminal, le programme interpréteur et de gestion des consignes exécutant une consigne de téléchargement d'un programme après avoir lu le mot de commande (ECW) et vérifié que celui-ci autorise cette consigne.

2. Système selon la revendication 1, caractérisé en ce que ladite procédure de contrôle de droits d'accès comprend une authentification du contenu du programme situé en zone non certifiée (NPZ).

3. Système selon la revendication 1, caractérisé en ce que ladite procédure de contrôle de droits d'accès comprend la vérification que ladite instruction de transfert de programme est stockée dans une zone certifiée (CPZ).

4. Système selon la revendication 3, caractérisé en ce que l'on ne peut accéder au programme de contrôle de téléchargement qu'à une adresse de programme commençant par une instruction spécifique (ENTRY).

5. Système selon la revendication 1, caractérisé en ce que le mot de commande (ECW) comporte :
- un premier champ destiné à commander un téléchargement et une lecture dans une zone non certifiée (NPZ) ;
- un deuxième champ destiné à commander un téléchargement et une lecture dans une zone certifiée (CPZ);
- un troisième champ destiné à autoriser le lancement d'un programme dans une zone non certifiée (NPZ) ;
- un quatrième champ destiné à autoriser le lancement d'un programme dans une zone certifiée (CPZ) ;
- un cinquième champ destiné à commander un téléchargement et une lecture des registres de la mémoire de travail (314) ; et
- un sixième champ permettant d'autoriser l'ouverture d'une session ;
le programme interpréteur et de gestion des consignes exécutant ou non, en fonction du mot de commande, le téléchargement, la lecture et le lancement d'un programme dans l'une des régions précitées, ou l'ouverture d'une session.

## Patentansprüche

1. System, das ein Terminal (3) enthält, das über eine Übertragungsleitung (2) mit einer Zentraleinheit (1) verbunden ist, wobei das Terminal enthält:
- einen Mikroprozessor und einen Speicher, der in einen Programmspeicher und in einen Schreib-Lese-Arbeitsspeicher (314) unterteilt ist, wobei der Schreib-Lese-Arbeitsspeicher aus Registern gebildet ist, wobei der Programmspeicher einen flüchtigen Speicher (31), einen nichtflüchtigen Sicherungsspeicher (32) und einen residenten Speicher (30) enthält, dadurch gekennzeichnet, daß jeder der den Programmspeicher bildenden Speicher unterteilt ist in wenigstens eine sogenannte "nicht beglaubigte" Zone (NPZ 311, 321, 301), die dazu bestimmt ist, Programme mit nicht beglaubigtem Sicherheitsniveau zu empfangen, und in eine sogenannte "beglaubigte" Zone (CPZ 312, 322, 302), die dazu bestimmt ist, Programme mit beglaubigtem Sicherheitsniveau, das höher als dasjenige der nicht beglaubigten Zone ist, zu empfangen, wobei die Ausführung eines Befehls zur Programmübertragung von einer nicht beglaubigten Zone an eine beglaubigte Zone einer Prozedur zur Steuerung der Zugriffsrechte auf die beglaubigte Zone unterliegt;
und daß das Terminal enthält:
- ein Programm zur Interpretation und Verwaltung von Anweisungen, das so beschaffen ist, daß es eine Interpretation zwischen einer vom verwendeten Terminal unabhängigen, höheren und kompakten Sprache und einer dem Mikroprozessor eigentümlichen Sprache ausführt und Anweisungen, die an das Terminal geschickt werden, ausführt, wobei dieses Programm auf jeden der Teile des Speichers zugreifen kann;
- ein Fernlade-Steuerprogramm (TELESEC), das wenigstens einen Befehl (CHSB) enthält, der ein in einem der Register des Schreib-Lese-Arbeitsspeichers gespeichertes Befehlswort (ECW) besitzt und definiert, ob das Fernladen eines Programms in die verschiedenen Zonen von einer externen Quelle zum Terminal erlaubt ist, wobei das Befehlswort (ECW) einen Wert besitzt, der durch den Befehl (CHSB) in Abhängigkeit von dem Terminal verliehenen bestimmten Rechten definiert ist, wobei das Programm zur Interpretation und Verwaltung von Anweisungen eine Anweisung zum Fernladen eines Programms ausführt, nachdem es das Befehlswort (ECW) gelesen hat und überprüft hat, daß es diese Anweisung erlaubt.

2. System nach Anspruch 1, dadurch gekennzeichnet, daß die Prozedur zur Steuerung der Zugriffsrechte eine Echtheitsprüfung des Inhalts des in der nicht beglaubigten Zone (NPZ) befindlichen Programms enthält.

3. System nach Anspruch 1, dadurch gekennzeichnet, daß die Prozedur zur Steuerung der Zugriffsrechte die Überprüfung enthält, ob der Programmübertragungsbefehl in einer beglaubigten Zone (CPZ) gespeichert ist.

4. System nach Anspruch 3, dadurch gekennzeichnet, daß auf das Fernlade-Steuerprogramm nur an einer Programmadresse zugegriffen werden kann, die mit einem spezifischen Befehl (ENTRY) beginnt.

5. System nach Anspruch 1, dadurch gekennzeichnet, daß das Befehlswort (ECW) enthält:
- ein erstes Feld, das dazu bestimmt ist, ein Fernladen und ein Lesen in einer nicht beglaubigten Zone (NPZ) zu befehlen;
- ein zweites Feld, das dazu bestimmt ist, ein Fernladen und ein Lesen in einer beglaubigten Zone (CPZ) zu befehlen;
- ein drittes Feld, das dazu bestimmt ist, den Beginn eines Programms in einer nicht beglaubigten Zone (NPZ) zu erlauben;
- ein viertes Feld, das dazu bestimmt ist, den Beginn eines Programms in einer beglaubigten Zone (CPZ) zu erlauben;
- ein fünftes Feld, das dazu bestimmt ist, ein Fernladen und ein Lesen der Register des Arbeitsspeichers (314) zu befehlen; und
- ein sechstes Feld, das ermöglicht, die Eröffnung einer Sitzung zuzulassen;
wobei das Programm zur Interpretation und Verwaltung von Anweisungen in Abhängigkeit vom Befehlswort das Fernladen, das Lesen und das Beginnen eines Programms in einem der obengenannten Bereiche oder das Eröffnen einer Sitzung ausführt oder nicht ausführt.

## Claims

1. System comprising a terminal (3) connected by a transmission line (2) to a central unit (1), the terminal comprising:
- a microprocessor and a memory divided into a program memory and a working random access memory (314), the working random access memory being constituted by registers, the program memory comprising a volatile memory (31), a non-volatile backed-up memory (32) and a resident memory (30), characterised in that each of the memories constituting the program memory is split into at least one zone known as "non-certified" (NPZ 311, 321, 301) intended to receive programs of a non-certified security level, and one zone known as "certified" (CPZ 312, 322, 302) intended to receive programs of a certified security level, higher than that of the non-certified zone, the execution of an instruction to transfer a program from a non-certified zone to a certified zone being subject to a procedure of checking access rights to the certified zone;
and in that the terminal comprises:
- an interpreter and order-handling program arranged so as to perform interpretation between a compact, advanced and independent language of the terminal used, and a language specific to said microprocessor, and to execute orders sent to the terminal, this program being able to access each of the parts of the memory;
- a program for monitoring down-loading (TELESEC) comprising at least one instruction (CHSB) having a control word (ECW) stored in one of said registers of said working random access memory and defining whether the down-loading of a program into the various zones from a source outside the terminal is authorised, the control word (ECW) having a value defined by said instruction (CHSB) as a function of predetermined rights given to the terminal, the interpreter and order-handling program executing an order to down-load a program after having read the control word (ECW) and verified that it authorises this order.

2. System according to Claim 1, characterised in that said process for checking access rights comprises an authentication of the content of the program located in a non-certified zone (NPZ).

3. System according to Claim 1, characterised in that said procedure for checking access rights comprises verification that said instruction to transfer a program is stored in a certified zone (CPZ).

4. System according to Claim 3, characterised in that it is only possible to access the program monitoring down-loading at a program address starting with a specific instruction (ENTRY).

5. System according to Claim 1, characterised in that the control word (ECW) comprises:
- a first field intended to control down-loading and reading in a non-certified zone (NPZ);
- a second field intended to control down-loading and reading in a certified zone (CPZ);
- a third field intended to authorise the launch of a program in a non-certified zone (NPZ);
- a fourth field intended to authorise the launch of a program in a certified zone (CPZ);
- a fifth field intended to control down-loading and reading of the registers of the working memory (314); and
- a sixth field making it possible to authorise the opening of a session;
the interpreter and order-handling program executing or not, depending on the control word, the down-loading, reading and launch of a program in one of the aforementioned regions, or the opening of a session.
